# EUROPEAN PATENT APPLICATION

(11) **EP 2 194 447 A1**
(43) Date of publication of application: **09.06.2010**
(21) Application number: 08170985.9
(22) Date of filing: 08.12.2008
(51) Int. Cl.: G06F 3/042

(54) **Electronic painting system and apparatus for input to the same**

(71) Applicant: IBBT vzw, 9050 Gent (BE); Universiteit Hasselt, 3590 Diepenbeek (BE)
(72) Inventor: Claesen, Luc, Joseph, Marie, B-3570, Alken (BE); Vandoren, Peter, Alfons, Florent, B-3590, Diepenbeek (BE); Van Reeth, Frank, B-2200, Herentals (BE)
(74) Representative: BiiP cvba

(57) **Abstract**

The present invention is related to an apparatus for providing input to an electronic painting system. The apparatus comprises a plate (502) arranged for receiving light and adapted to let at least some of the received light undergo total internal reflection within the plate and to allow the total internal reflection to be frustrated and a structure at least comprising a support layer (500) for supporting the plate, whereby the structure has a surface adjacent to a surface of the plate in order to let the frustrated total internal reflection propagate into the structure and whereby the structure is arranged for sensing the frustrated total internal reflection.

## Description

### Field of the Invention

The present invention generally relates to the field of electronic painting systems suitable for making drawings and paintings with tools like brushes and pencils. More in particular the invention relates to electronic painting systems based on frustrated total internal reflection.

### Background of the Invention

Expression of creativity has been important in various areas: graphics design, publicity, art, cartoons, moving pictures, animation, recreation etc. Traditionally such art is created by stylus shaped objects like pens, pencils, brushes and the like, although other objects, such as for example tissue, are also used in the creation process.

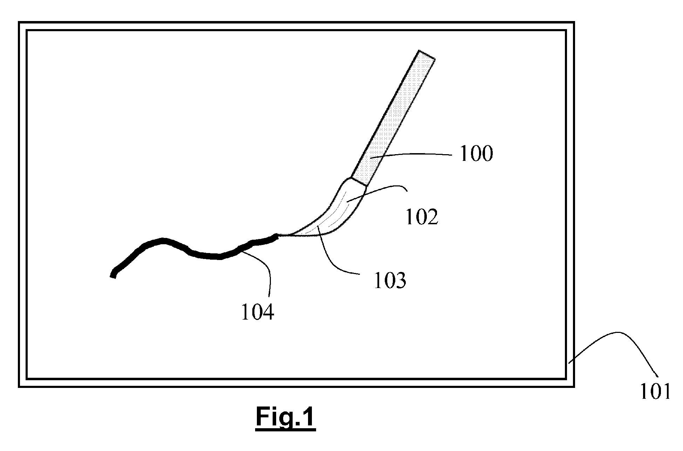

Fig.1 shows the typical setup of a traditional drawing or painting environment. A painting tool like a brush 100 is used to draw on a canvas 101. The brush 100 has a brush tuft 102 at the front consisting of bristles 103. The brush tuft is used to hold a liquid such as ink or paint. When the tuft 102 touches the canvas 101, ink is transferred from the tuft 102 to the canvas. The visual effect of the liquid transferred from the tuft 102 to the canvas 101 depends on several factors: the brush tuft shape, the composition and materials used for the bristles, the deformation of the bristles by the artist during painting, the fluid dynamics of the paint liquid and associated pigments in the brush and on the canvas etc...

By means of computers and embedded processors virtual drawings and paintings can be made. This has the advantage that it is easier to manipulate, roll-back, undo, edit and animate such drawings and paintings.

Early developments in digital paint systems already stem from the sixties. Hereby digital computers with their interactive graphics displays and various kinds of input devices have been used to mimic the act of drawing and painting. A.R. Smith provides in "Digital Paint Systems: An Anecdotal and Historical Overview", (IEEE Annals of the History of Computing, April-June 2001, pp. 4-30) an overview of the evolution in electronic paint systems. He advocates that a paint stylus should not be activated by a button status (up or down) as the pressure by the finger influences the painted strokes, causing jerks. Currently most computers are equipped with painting software that can be operated by a computer mouse. The expressiveness and use of a computer mouse for painting is very limited when compared to real pencils or brushes.

To enable more efficient and natural drawing as well as better nuances as compared to a computer mouse, stylus based systems are used in the current state of the art. The stylus has the shape of a writing or drawing instrument. The position and movement of the stylus tip with respect to a reference drawing plane is measured. This stylus position can be determined based on several methods and physical characteristics.

Patent document US5420607 presents an electronic brush that can be used in conjunction with a CRT display. The brush has fibre optic bristles and a CCD detector in the brush.

In 'I/O Brush: Drawing with Everyday Objects as Ink' (Proc. of Conf. on Human Factors in Computing Systems (CHI '04), Vienna, Austria, April 24-29, 2004) a computer input device is disclosed that has the shape and bristles of a real brush. In the centre of the brush there is a colour camera. The brush can be used to record images with the camera in the brush from real life textures and afterwards use these textures to 'paint' them on a back projection display screen. This setup does not provide the nuances of real painting.

Document US 6414672 discloses a screen based multi-touch system based on diffuse illumination.

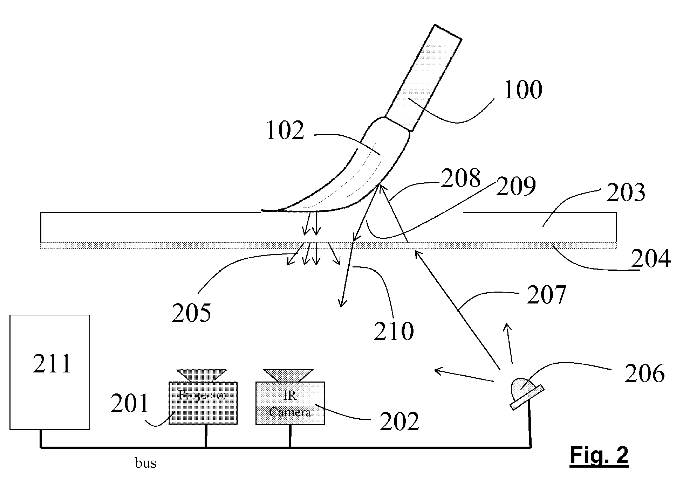

Microsoft has illustrated the use of brushes and other objects to draw and paint on its "MicroSoft Surface". The MicroSoft surface is based on diffuse illumination. Fig.2 illustrates the concept of using diffuse illumination to track objects, including brushes, on a surface. A surface is constructed out of a diffuser screen 204. Diffuser screen 204 can be used to project an image by a projector 201. This image can be whatever computer screen or the interactive output of a graphics painting program. The diffuser screen 204 may be a dedicated diffuser screen such as Rosco Gray#02105. The diffuser screen has the property of diffusing incident light waves in various directions, making the screen image visible from various view angles. On top of or under such a diffuser screen a light transparent surface plate 203 can be placed to provide mechanical strength to support the screen 204. The back side of the diffuser screen 204 is illuminated by one or more diffuse illuminators 206. Typically illuminators 206 in the infrared light range are used. The light rays 207 are casted on the back of the diffuser screen 204. From the diffuser screen 204 the light rays are diffused in several directions, for example 208. Light rays reaching objects located above the diffuser screen 204 (like the brush tuft 102) can be further reflected and/or diffused. An example is ray 209. When such reflected light ray 209 reaches the diffuser screen back, it is further diffused in other directions such as for example ray 210. The effect of such indirect diffused light due to objects above the diffuser screen can be recorded by an infrared camera 202. In this way the camera 202, when connected to an image processing system 211, determines on which position objects are located in the diffuser screen plane. Objects nearer to the diffuser screen 204 appear sharper than objects located further on top. The diffusion effect 205 due to the brush tuft 102 is more intense than the diffusion due to parts higher above the screen, like the light rays 209 and 210. An advantage of diffuse illumination is that it allows detecting hovering objects not in contact with or touching the surface. However, for detecting the contact surface of brushes with the top surface it is not easy to discriminate between brush bristles making actual contact with the surface or not. Another disadvantage is that diffuse illumination detects all objects on top of the surface and cannot discriminate between art creating objects such as brushes and other objects, or the user's hands and arms touching the surface. For obtaining good mechanical strength the top transparent plate 203 is made rather thick, which results in a visual parallax between the brush tuft 102 position contacting the transparent plate and the actual image on the diffuser screen 204. The support transparent plate 203 and the diffuser screen 204 can also be realized as one plate where one side consists of a frosted structured surface to diffuse the light.

Ultrasonic transducers can be used to calculate the distance from a pen tip to fixed reference points. This method requires the lines of sight between the transducers not to be obstructed by other objects or by, for example, the hand of the user.

The measurement of electronic capacitance can be used to determine the position of objects, such as for example a brush as disclosed in US5488204.

The position can also be determined by the interaction of magnetic transducers in a drawing pad and in the stylus as disclosed in patent US 5028745. These systems can detect stylus contact, position and tilt with the drawing surface as well as hovering the stylus in close vicinity of the drawing pad surface. The pen stylus can also be equipped with a force sensor to measure the force along the direction of the pen shaft. By exploiting the shape of the magnetic interaction pattern between the stylus and the drawing pad, such systems can also detect the stylus tilt. Wacom integrates the drawing pad together with a flat display system in its Cintiq product.

Magnetic transducer based systems are still limited for the application of drawing and painting. Most systems only use a rigid pen type stylus. Even by employing force sensors, only a very rough haptic feedback is possible in comparison with a real brush. Systems like Wacom Cintiq also have a problem of parallax due to the thickness of the glass plate on top of the underlying LCD screen. The most important shortcoming however is that no variety in brush tuft footprints can be detected in these systems. The movement, angle, pressure, torque of a brush and the bristles in its tuft enable much more expressiveness than in current commercial drawing systems. This expressiveness is very important in painting as well as in calligraphy.

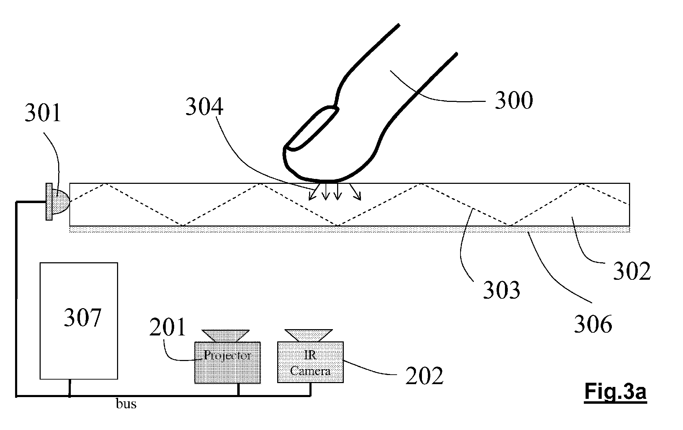

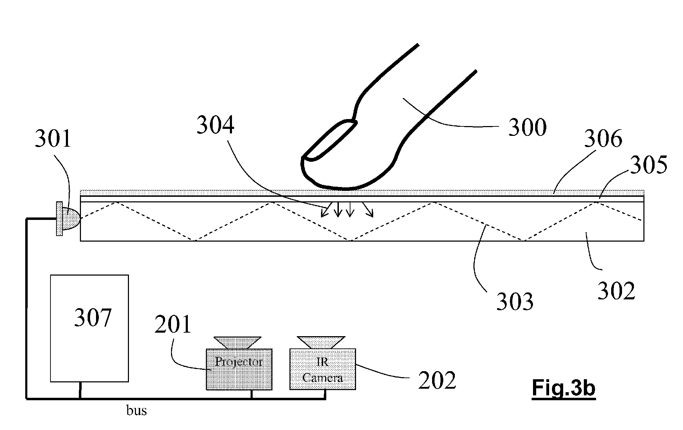

When electromagnetic waves such as light are propagating through media, their electromagnetic wavelength depends on the material properties of the transparent media. The wavelength of electromagnetic waves in a material is expressed by the material's breaking index. Air and water have different breaking indexes causing visual effects in water-air surface interfaces. When the angle at which light reaches the interface between one medium and another exceeds a critical value, the light is internally reflected at the surface. This effect is exploited for example in optical fibres, binoculars etc. The light propagated in this way inside a medium, like a fibre or a surface, is called total internal reflection. The total internal reflection can be frustrated when other external media having other breaking indices are in contact with the medium having total internal reflection. This is because the breaking indexes of the two media have changed at this place. In this way frustrated light can selectively escape the first medium. In 'Low-Cost Multi-Touch Sensing through Frustrated Total Internal Reflection' (Proc.18th Annual ACM Symp. on User Interface Software and Technology, Seattle, Oct. 23-26 2005, pp.115-118) Jefferson Han presents a multi-touch input system based on the concept of Frustrated Total Internal Reflection (FTIR), which is illustrated in Fig.3a. One or more infrared light sources 301 are positioned on the border of a transparent surface 302. This surface plate 302 typically is acrylic or other light transparent material. The electromagnetic waves emitted by the infrared light source 301 with an incident angle to the normal of the plate 302 surface exceeding the critical angle are internally reflected inside the surface plate. An example is the light ray 303. When objects 300 touch the surface plate 302, the total internal reflection is frustrated and light rays 304 are emitted at that place. This frustrated infrared light can be detected by an infrared camera 202 located under the surface. When this camera is connected to an image processing system 307, the shape and position of the frustration can be determined. In this way the position and area where multiple fingers touch the plate can be detected. When using a diffuser screen 306 located under the surface 302 with total internal reflection (as shown in Fig.3a) or on top of said surface (as shown in Fig.3b), an image can be projected on the screen 306 by a digital light processing (DLP) or liquid crystal display (LCD) projector 201 located under the surface 302.

In the state of the art the surface plate 302 is realized as a thick acrylic layer, typically 5 to 15 mm thick. This thickness is required to provide sufficient mechanical strength and support for the surface 302 to be able to support the interaction area which usually has a diameter of 50cm or more. The thick acrylic layer 302 is also required for getting higher efficiency and better coupling of the infrared LEDs 301 to enable total internal reflection in the surface 302.

When the diffuser screen 306 is located under the surface 302 as in Fig.3a, the objects 300 are in direct contact with the surface and cause frustration of the total internal reflection of the electromagnetic light waves inside 302. When using brushes as input there is a problem of parallax of the contact area of the brush with the surface 302 and the image projected on the diffuser screen 306 located below. This is caused by the inherent thickness of the current multi-touch screens based on frustrated total internal reflection.

When the diffuser screen 306 is placed on top of the surface 302 as in Fig.3b, an additional compliant layer 305 has to be provided (see the above-mentioned publication by Han). This is because most diffuser screens do not induce a high enough frustration 304 of the total internal reflection. Typically a thin structured silicone layer is used as compliant layer 305. Another option is a compliant layer coated on or combined with a diffuser screen 306. This setup of Fig. 3b is currently very popular in the realization of multi-touch screens, based on frustrated total internal reflection. Employing the setup of Fig.3b for the input of brushes is rather difficult. The bristles inside the brush tuft have to cause total internal reflection at the interface of the surface 302 and the compliant surface 305. This can only be achieved by transferring the mechanical force from the brush and its bristles through the diffuser screen 306 and the compliant surface 305. As a result higher forces have to be exerted on the brush than with normal painting. Especially when using watercolour painting and Chinese calligraphy, the forces on the bristles are too low to frustrate the total internal reflection to a high enough degree to be useful. To cause frustration unnatural high force has to be applied to brushes to use such FTIR setup for brush based painting input.

Patent application US2008/029691 by Han (also W02008/017077) relates to a multi-touch sensing display based on frustrated total internal reflection. In one embodiment it discloses a display having a compliant surface overlay disposed adjacent the contact surface of the optical waveguide. The compliant surface also operates as a diffuser for the rear-projection.

In US5181108 the drawing prism based Optipaint^{™} system is disclosed. This system makes use of total internal reflection in a prism. On one side of the prism there is an imager, on the top side there is a painting plane. By using wet brushes in contact with the top side of the prism, the internal reflection is frustrated and registered by the imager. The generated digital computer drawing is displayed on a separate computer screen. This system has the possibility for a good and detailed image of the brush on top of the prism. The drawback is the size and weight of the prism, as well as the lack of direct image feedback to the user on the place where he/she is painting. When an artist paints he/she can always see the brush and the effect of the brush on the canvas. In the invention disclosed in US5181108 this direct visual feedback is lacking.

Although a lot of dedicated computer input devices have been created over the years, the real expressiveness, haptic as well as visual feedback and nuances provided by real painting brushes have not been reached yet with digital paint systems. Consequently, there is a need for an input system allowing the use of real drawing and painting objects such as brushes with dedicated tufts and shapes and giving direct haptic and visual feedback to the user.

### Aims of the invention

The present invention aims to disclose an apparatus for providing input to an electronic painting system that provides direct feedback to the user. The invention further aims to provide an electronic painting system comprising such apparatus.

### Summary

The present invention relates to an apparatus for providing input to an electronic painting system. The apparatus comprises a plate arranged for receiving light and adapted to let at least some of the received light undergo total internal reflection within said plate and to allow the total internal reflection to be frustrated and a structure at least comprising a support layer for supporting said plate. The support layer is in certain embodiments capable of guiding light. The structure has a surface so positioned with respect to the surface of the plate that the frustrated total internal reflection can propagate from the plate into the structure. The structure thereto has a surface adjacent to a surface of said plate. The structure comprises means for sensing said frustrated total internal reflection. The top and the bottom surface of the plate are smooth such that electromagnetic waves can be reflected inside by total internal reflection. This apparatus can be used where only position input is required and visualisation on a display is not needed.

The structure may comprise one or more layers. In case there is a single layer, the surface of the structure adjacent to the surface of the plate is a surface of said support layer. The support layer gives the structure better mechanical strength and provides mechanical support to the plate. In a preferred embodiment the structure comprises, apart from the support layer, a layer of a diffuser surface, acting as display screen, i.e. a diffuser screen, which is disposed on said surface adjacent to the surface of the plate. Providing this diffuser screen renders the apparatus suitable for visualising the user input on a display. In an embodiment of the invention the diffuser screen and the support layer are integrated.

Preferably there is a small gap provided between the plate and the structure. In this way the total internal reflection of the light is not affected by the apparatus itself.

The apparatus advantageously comprises at least one electromagnetic wave source, typically an infrared source, for inputting light into the plate. Optionally, an optical instrument like a contractor or a lens is used to enter the light into the plate. The apparatus preferably further comprises at least one background light source for detecting objects hovering above or in contact with the plate.

In an advantageous embodiment the plate has a thickness of 0.8 mm or less. The plate is preferably made of transparent material.

In another embodiment the apparatus comprises a projector for displaying images on the diffuser screen. Examples of projectors are an LCD projector, a DPL projector etc...

In another preferred embodiment the sensing means comprised in the structure is a flat sensor array and the structure further comprises a flat display screen. The electromagnetic wave sensor array can detect the position, intensity and wavelengths of the frustrated total internal reflection. Preferably the sensors are integrated on the top surface of the structure adjacent to said surface of said plate. The flat screen display is typically an LCD, OLED, LED or plasma display. In this embodiment it is not necessary that the support layer is capable of guiding light.

The means for sensing of the apparatus is advantageously a camera adapted for detecting the frustrated total internal reflection. Using a plurality of cameras can be envisaged as well. The (two-dimensional) image camera(s) can detect the position, intensity and wavelengths of the frustrated total internal reflection.

The apparatus preferably further comprises processing means for processing the sensed frustrated total internal reflection. The apparatus may then also comprise a control processor for controlling the processing.

The present invention also relates to an electronic painting system comprising an apparatus as previously described. The system can be used for game playing, creating art, calligraphy painting, illustrative purposes etc...

In yet another embodiment the system comprises a drawing or painting instrument. Examples are paint brushes, calligraphy brushes, palette knives or paint rollers.

The invention also relates to a painting that is obtained by means of the electronic painting system as described above.

### Brief Description of the Drawings

Fig. 1 illustrates the setup of a prior art drawing or painting environment.

Fig. 2 illustrates a prior art solution for multi-touch objects and input detection based on diffuse illumination.

Fig. 3a illustrates a multi-touch input device based on the principle of total internal reflection. Fig. 3b illustrates a multi-touch input device based on the principle of total internal reflection by using a compliant surface.

Fig. 4 illustrates a preferred embodiment of the invention, using camera(s) for detection of frustrated total internal reflection and backprojection for image display.

Fig. 5 illustrates another preferred embodiment of the invention with a flat screen display (as for example LCD, OLED, plasma) with integrated flat sensor array for detection of the frustrated total internal reflection.

### Detailed Description of Embodiment(s)

Those of ordinary skill in the art will realise that the following description of the present invention is illustrative only and not in any way limiting. Other embodiments of the invention will readily suggest themselves to such skilled persons.

The present invention discloses an electronic input and painting system in which drawings and paintings can be made by actual painting tools, such as brushes, towels and other objects used in creating art and painting with real paint. The painting is made on an input surface plate sensitive to the touch of the painting tools to the input surface. When the input surface is combined with a display screen, it acts as an electronic canvas and provides direct interactive visual feedback to the user on what is being drawn or painted.

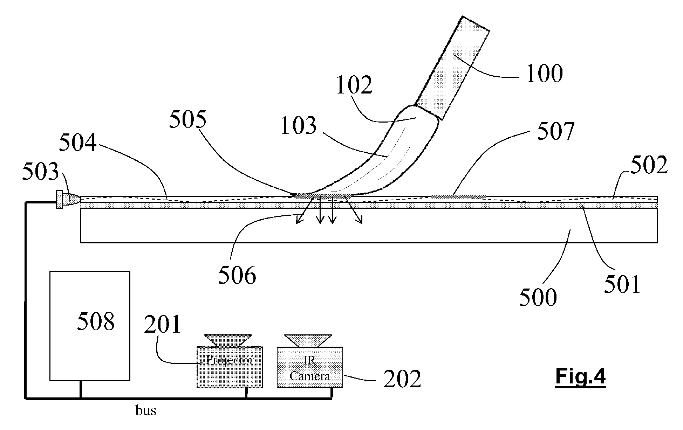

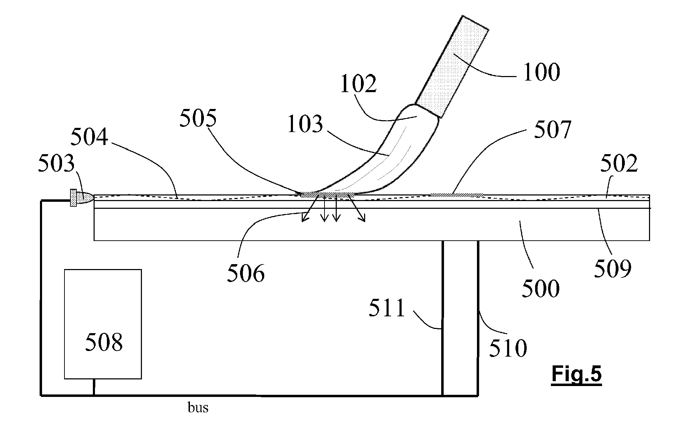

The apparatus according to the invention provides input to an electronic painting system and comprises a surface plate 502 that constitutes the user input image forming and a structure for detection of the user input. The detection can be performed by electromagnetic wave sensors, such as, e.g., cameras 202 (Fig.4) and/or sensors integrated in a flat surface (Fig.5). The structure can in an advantageous embodiment also include an image display. This image display can be implemented by backprojection on a diffuser screen 501 as shown in Fig.4, but it may, for example, also be a flat display screen 509 like an LCD, OLED or plasma display, as shown in Fig.5. The implementation of the structure can constitute a larger volume. For example, the structure may comprise a video camera 201 placed behind a diffuser screen 501 for backprojection, as shown in Fig.4. When in support layer 500 a flat area, such as a flat LCD, OLED or plasma display screen is integrated, optionally with integrated light sensors as well, the structure as shown in Fig.5 is more compact.

A preferred embodiment of the invention is depicted in Fig.4, which shows a cross-section of the plate and structure. It is clear that the apparatus according to the invention can be positioned under a variety of possible positions and angles, but for the clarity of the explanation the terms "on top of" and "below" refer to the position as shown in Fig.4. The apparatus comprises a surface plate 502 on top of a surface of the structure, said structure comprising in this embodiment a diffuser screen 501 on top of the support layer 500. Advantageously a small gap is provided between the plate and the structure. The apparatus then does not affect the total internal reflection of the light. A diffuser screen 501 acting as backprojection screen placed behind plate 502 has a small air gap in between the two surfaces, in case the two surfaces are not bonded or glued together. This does normally not noticeably interfere with the total internal reflection in plate 502.

The surface 502 is a translucent plate typically made of transparent material. It should at least be transparent for the electromagnetic waves emitted by the electromagnetic wave source 503, as well as for the visible light of the optional display screen. Exemplary materials are acrylic or glass. The top face and bottom face of the plate are preferably smooth, such that light can be propagated inside the surface based on the principle of total internal reflection 504. In the preferred embodiment of Fig.4 the surface plate and the structure comprising the support layer are planar. In alternative embodiments the surface could be non-planar, cylindrical, spherical or arbitrarily curved, as long as sufficient total internal reflection within the surface plate is possible. An example of an arbitrarily curved surface could be a landscape shape.

To the sides of the plate 502 there is at least one electromagnetic wave source 503. Typically this is an infrared light source, such as an infrared LED. Other frequencies of light, including visible light, are also possible. Preferably the light intensities can be modulated in time under control of an image processing system 508. To enable an efficient coupling of the light source 503 with the plate 502 dedicated concentrator lenses can be used.

Under the surface plate 502 there is the part of the apparatus which can sense the position and spatial intensities of the frustration of the electromagnetic waves. In the embodiment illustrated in Fig. 4 the structure is not necessarily a single planar structure. The structure shown in Fig.4 comprises a diffuser screen 501 and a transparent support layer 500. When only position input is required and no visualization on a display, the diffuser screen 501 is not necessary. For many applications however a visual feedback of the user input on a diffuser screen 501 is preferable. For this purpose a projector 201 can be used that projects interactive images on the screen 501. To sense the frustration of the total internal reflection in the structure for detection one or more infrared cameras 202 can be used. The diffuser screen 501 can also be integrated as part of the transparent support layer 500. This could be done by using a transparent layer where the top face has been structured in order to diffuse the incident light to various directions.

When an object like a painting brush 100 is in contact with the top of the surface plate 502 the internal reflection 504 can be frustrated, as indicated by 506. The frustrated infrared light can be detected by the sensing means in the structure below the plate. In Fig.4 an infrared camera 202 is employed for that purpose. When drawing and painting, it is desirable that tools for digital painting have similar expressive potential as real drawing and painting tools on a paper or canvas. When using regular drawing and painting tools directly on top of the plate 502, frustration can only occur where there is enough contact of the bristles 103 with the surface of the plate 502. Experimentation with real brushes shows that most brushes used in drawing and painting only make very little contact with the surface 502, thereby providing only very weak or even undetectable frustrated light 506 to be sensed by the infrared camera 202. A solution to this problem is explained in the next paragraph.

A fluid 505 is advantageously added to improve the contact between the surface 502 and the bristles 103 of the brush tuft 102. This fluid can be water, oil or any other light transparent fluid of low viscosity and compatible with the surface plate 502. This is a very natural extension of normal painting tools as applied in watercolour painting or calligraphy, where also wet brushes are used. The fluid affects the shape and deformation of the wet brush tuft 102 and the deformation of the bristles. By using a wet brush a small film of fluid 505 forms the interface between the surface 502 and the bristles 103 of the brush tuft 102. As the wavelengths of light in the transparent material of which plate 502 is constructed, are more similar to the wavelengths in transparent fluids such as water and considerably different from the surrounding air, the internal reflection 504 does not occur at the interface between the surface 502 and the fluid 505. Instead the previously internally reflected light waves 504 enter the fluid film 505 until they reach the bristles 103 of the brush. The light waves are reflected back in several directions back into the fluid film 505, the surface 502 and further on where they can be detected by the infrared camera 202. The infrared camera can detect a clear picture of the contact surface of the brush as well as a clear picture of the individual bristles 103, their shapes, direction etc... on the contact surface of the fluid film 505. This very accurately models the real contact surface of a brush with its canvas.

Dedicated computer software can use the footprint image of the fluid film 505, including the position, the shapes, the orientation of bristles and the frustrated image 506 to accurately model the painting activity, using an active brush and active canvas model, taking into account the physics of fluid dynamics and the diffusion of pigments inside fluid paint, the evaporation of the paint thinner and drying process to generate a realistic effect on a virtual canvas. Similar methods have been realized and are well known in the art.

When the brush 100 is lifted from the plate 502, no contact is made anymore with the canvas, but a small amount of fluid can remain on the surface. An example of this is the local wet area 507 in Fig.4. If the fluid is of sufficiently low viscosity, like for example water, the remaining fluid 507 evenly spreads over the surface 502. The top surface area of the fluid in local wet area 507 is parallel to the surface 502. The total internal reflected electromagnetic wave 504 inside the plate 502 at the interface with the fluid film 507 is not internally reflected inside 502, but propagates into the fluid film 507, until it reaches its surface that forms the interface with the ambient air. At that place inside the fluid film 507, the electromagnetic light is internally reflected back. The electromagnetic light further goes back into the plate 502, after which it can be kept inside the plate by total internal reflection. At the edges of the fluid film 507, some of the incident electromagnetic light waves propagated through the interface plate/fluid film either escapes through the fluid/air interface. Other electromagnetic light waves on these edges are internally reflected in directions that are smaller than the critical angle necessary to keep the light inside the first surface. Part of these light waves can be detected by the infrared camera 202 as very thin and low intensity circumference of the fluid film 507. The intensities of the images due to the frustration of light 506 above the contact of the brush with the surface via the fluid 505 are much higher than the images of the circumferences of the left fluid films 507. With image processing techniques known to a person skilled in the art it is easy to discriminate between these two images.

The apparatus according to the invention may further be augmented with a background electromagnetic wave source of visible or invisible light under or in said structure. Such electromagnetic wave source could be illuminators, a display or a display projector. These can be connected to and controlled by the image processing system 508. Illuminators may comprise infrared LEDs with light frequencies similar to or different from the frequencies of 503. The light source of an LCD projector or DLP projector and the colour filters or colour wheels can be adapted to also enable projection of infrared light besides visible colours. Flat displays like LCD, OLED and plasma displays could be modelled to also display infrared light besides the normal visible light. Discrimination between the illumination by these background electromagnetic wave sources and the sources 503 can be obtained either by using different electromagnetic wavelengths and using colour filters in the sensors or by time multiplexing of the illumination under control of the image processing system 508 and selectively measuring the responses by the sensors 202 or 509. The apparatus can then be used to detect the presence and positioning of objects hovering above and/or in contact with the surface plate. The apparatus can so make a clear distinction between objects in direct contact detected by means of the frustrated electromagnetic waves inside the first surface and objects hovering over or in contact as detected by the background electromagnetic wave source. The background electromagnetic wave source is preferably physically the same apparatus as the display device inside or behind the structure for sensing. A flat screen display can be easily adapted to, besides displaying light in the visible spectrum (for example red, green, blue), also display light in the invisible spectrum such as for example near infrared light. For technologies such as LCD, DLP etc, this means that besides colour filters in the visible spectrum, also filters in the invisible (for example: near infrared) spectrum would be included. In this way an infrared illumination is possible under control and coordination by the image processing system. This would allow to do time and spatial modulation of the infrared illumination for purposes of selective sensing and detection by means of diffuse illumination.

The electromagnetic wave source in connection with the surface plate and the background electromagnetic wave source are advantageously individually time-, position- and/or wavelength-modulated and/or synchronized with the electromagnetic wave sensing in or under the structure. Two or more timeframe measurements by the sensing of electromagnetic waveforms in the structure are used to better discriminate features in the images sensed as a result of the specific electromagnetic wave sources. This can be accomplished by the image processing system 508.

Further image processing is required to determine the position, shape and image of the brushes. This can be done by an image processing system 508 comprising a single or a plurality of image processors connected to the infrared camera 202. The image processors can be implemented in a computer, embedded processors, FPGAs, ASICs (Application Specific Integrated Circuits), SoCs, dedicated hardware or any combination thereof. The images taken by the camera 202 must be calibrated for position on the plate 502 to compensate for side effects, such as lens distortions etc. A background image without illumination by the source 503 can be subtracted at regular instances from the image at a specific moment, in order to better discriminate the effects of undesired parasitic ambient background light. In an analogous way background images without any user or brush input, with and without illumination by source 503, can be used to better discriminate the actual effect of the brush input. This allows compensating for stray light by source 503 and parasitic frustrated light due to wear, scratches, and particles and dirt accumulated on the surface 501. These background compensations can be done under user control by the image processing system 508. The image processing system may comprise one or more control processors. At regular instances the lighting of the illuminators 503 can be controlled automatically by means of a single or plurality of computers or embedded processors that are also communicating with the infrared camera 202. The illumination can then be synchronized with the shutter of the infrared camera 202. The background image, without illumination by 503, can then be taken as a frame automatically interleaved with a single or plurality of frames taken with the illumination by light source 503 switched on. The images taken by the camera 202 must be segmented to identify the brushes or other drawing objects.

Due to bandwidth and electronics limitations vision cameras provide a trade-off between resolution in the amount of pixels and the frame rate at which images can be taken. In the state of the art image sensors or vision cameras are available wherein selected areas, regions of interest, of the total image plane can be captured at higher frame rates compared to the full image capture rate, depending on the size of the selected areas, and further processed by computers and embedded processors. In the present invention this mode can be used to perform gradual information capturing by the cameras. In a low resolution high frame rate mode, the overall position of the drawing instruments can be determined. Based on this global position information, individual high resolution images can be taken of the footprints 505 of the individual drawing instruments. This lowers the overall processing requirements and speeds up the sampling rate at the drawing instrument. In order to realize greater areas, higher resolutions of the sensing capabilities and/or higher sensing rates, more cameras 202 can be used in a coordinated way.

The electronic painting system according to the invention can be used to track the position and footprint of drawing instruments on top of the plate. The result can be visualized on a regular computer screen or by means of a projector. For the user it is however more efficient to directly visualize the result of his drawing and painting right underneath the place where the user is drawing on the surface plate. Therefore a preferred embodiment includes a diffuser screen 501 on which an image can be displayed. This could be an image generated by a projector 201 or a plurality of projectors that are also connected via a wired or wireless communication bus to the image processing system 508 comprising one or more computers and/or embedded processors communicating with the illuminators 503 and infrared cameras 202. To provide enough mechanical support a light transparent layer 500 is placed below the screen 501. The transparent layer 500 can be made of acrylic, glass or other light transparent material. The coordinates of the generated images displayed must be aligned with the coordinates and footprints 505 generated by the objects in contact with the first surface.

The diffuser screen 501 can be integrated with the transparent support layer 500 by having a transparent layer structured on the top in order to diffuse the incident light as is required for viewing a display screen.

The input apparatus according to the invention uses a very thin upper surface 502 in which infrared light is propagated based on total internal reflection. To avoid problems of parallax, due to the distance between the input devices like brushes and the image feedback of the painted result on the diffuser screen 501, the plate 502 is thin. This surface plate 502 has in a preferred embodiment a thickness of 0.8mm or thinner. Therefore the surface plate is often referred to as 'surface' in this description. The projectors 201 and the infrared cameras 202 and the infrared lights 503 are controlled by an image processing system 508.

In another preferred embodiment the structure to be positioned under the surface 502 comprises a flat screen display 509 and integrated and/or interspersed flat sensor array as illustrated in Fig.5 on top of support layer 500 or, preferably, integrated with said support layer. The information of the sensor array is communicated to the image processing system 508 via the wired or wireless communication bus 511. The information for the display control is communicated via the wired or wireless communication bus 510 from the image processing system 508. Flat screen display technologies are well known, for example: LCD, OLED, plasma etc... The display pixels for different electromagnetic light wavelengths of the displays can be interspersed with light sensing pixels for different electromagnetic wavelengths. The electromagnetic wavelengths sensed and displayed can include visible and invisible light. In this way a direct detection and processing of the objects on top of the surface plate can be done by the integrated sensor pixels, the result of the drawing and/or user input activity can be displayed on the flat display. In this embodiment a diffuser screen might be omitted. Instead of interspersed sensors, a camera 202 could also be located behind a flat screen, like for example an LCD display.

By using structured or unstructured visible or invisible light projected on the diffuser screen under the plate 502 or displayed by a flat screen display, whatever the specific embodiment, the sensing elements in the structure for detection located under the plate can detect the diffuse illumination of objects and or user manipulations above the plate 502. By using coordinated modulation of the illuminators 503, the projectors 201 and light sensors 202, a separate detection of the user input by means of frustrated total internal reflection in contact with the surface 502 and the user input by means of the detection of the effects of diffuse illumination can be done. The FTIR input proposed in the present invention often uses liquid to accentuate a painting activity, while the diffuse illumination can be used for multi-touch system control, menu selection, window manipulation as well as general computer commands as familiar in windows based operating systems and multi-touch systems.

An advantage of this invention with respect to methods known in the art is that real brushes and art creation instruments can be used. Brushes of various tuft shapes and bristle materials can be used such as in real painting. By using a wet brush the brush behaves just like a real brush dipped in ink or paint. The thin surface plate allows via the underlying second surface including a display for a direct display of the drawing or painting produced. Having a virtual painting, the strokes can afterwards still be manipulated by roll-back, undo, edit and can be used for generating animations for subsequent use in cartoon, film, publicity productions etc...

## Claims

1. An apparatus for providing input to an electronic painting system comprising a plate (502) arranged for receiving light and adapted to let at least some of the received light undergo total internal reflection within said plate and to allow the total internal reflection to be frustrated and a structure at least comprising a support layer (500) for supporting said plate, said structure having a surface adjacent to a surface of said plate in order to let said frustrated total internal reflection propagate into said structure and comprising means for sensing said frustrated total internal reflection.

2. Apparatus as in claim 1, wherein said structure comprises a diffuser screen (501), said diffuser screen being disposed on said surface adjacent to said surface of said plate.

3. Apparatus as in claim 2, wherein said diffuser screen (501) and said support layer (500) are integrated.

4. Apparatus as in claim 1, wherein said surface of said structure adjacent to said surface of said plate is a surface of said support layer (500).

5. Apparatus as in any of claims 1 to 4, wherein a gap is provided between said plate and said structure.

6. Apparatus as in any of claims 1 to 5, further comprising at least one background light source for detecting objects hovering above or in contact with said plate (502).

7. Apparatus as in any of the previous claims, wherein said plate (502) has a thickness of 0.8 mm or less.

8. Apparatus as in any of claims 1 to 7, wherein said means for sensing is a camera (202) adapted for detecting said frustrated total internal reflection.

9. Apparatus as in any of claims 2 to 8, comprising a projector (201) for displaying images in the visible and/or invisible frequency range on said diffuser screen.

10. Apparatus as in any of claims 1 to 9, wherein said means for sensing is a flat sensor array and wherein said structure further comprises a flat display screen.

11. Apparatus as in any of the previous claims, further comprising processing means (508) for processing said sensed frustrated total internal reflection.

12. Apparatus as in claim 11, further comprising a control processor for controlling said processing.

13. Electronic painting system comprising an apparatus as in any of claims 1 to 12.

14. Electronic painting system as in claim 13, further comprising a drawing or painting instrument.

15. Painting obtained with an electronic painting system as in claim 13 or 14.
